(19) Europäisches Patentamt
European Patent Office
Office européen des brevets

(11) **EP 2 537 813 A1**

(12) **EUROPÄISCHE PATENTANMELDUNG**

(43) Veröffentlichungstag:
**26.12.2012 Patentblatt 2012/52**

(51) Int Cl.:
***C02F 9/00*** *(2006.01)*　　*C02F 1/52* *(2006.01)*
***C02F 103/10*** *(2006.01)*　　*C02F 1/44* *(2006.01)*

(21) Anmeldenummer: **11171007.5**

(22) Anmeldetag: **22.06.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder:
• **Haseneder, Roland, Dr.**
**09599 Freiberg (DE)**
• **Härtel, Georg, Pr.**
**09599 Freiberg (DE)**
• **Rieger, Andre**
**09599 Freiberg (DE)**
• **Steinberger, Paul**
**09599 Freiberg (DE)**

(54) **Verfahren zur Aufarbeitung von Minenwässern**

(57)　　Die Erfindung betrifft ein Verfahren zur Aufarbeitung von Minenwässern (1).

Einem aufzuarbeitenden Minenwasser (2) wird zuerst zumindest einmal ein härtefreies, alkalisches Reagenz (3) zugegeben (11, 12, 13, 15), wodurch Metalle (5, 6, 7) als Hydroxide (8, 8, 10) aus dem aufzuarbeitenden Minenwasser (2) gefällt bzw. ausgefällt werden (Metallfällung, 21, 22, 23, 25).

Dem nun metallfreien, aufzuarbeitenden Minenwasser (30) wird erfindungsgemäß nach der Metallfällung (21, 22, 23, 25) ein härtebildendes Fällungsreagenz, wie ein kalkhaltiges Reagenz (4), beispielsweise als kalkhaltige Suspension, insbesondere als eine Kalksuspension oder eine Löschkalksuspension, beispielweise in Form von Kalkmilch, zugegeben, wodurch Gips (16), insbesondere in Form von Gipsschlamm, aus dem nun metallfreien, aufzuarbeitenden Minenwasser (30) ausgefällt wird (Gipsfällung / Sulfatfällung 24).

Somit erfolgt bei der Erfindung eine sequenzielle Abtrennung der Metalle (5, 6, 7) und des Sulfates (17) aus dem aufzuarbeitenden Minenwasser (2) durch entsprechende Fällung mittels jeweiliger entsprechender Fällungschemikalie (21, 22, 23, 25 bzw. 24), wobei bei der der Metallfällung (21, 22, 23, 25) nachfolgender Gipsfällung (24) ein metallfreier, unbedenklich zu deponierender Gipsschlamm (50) anfällt.

FIG 1

EP 2 537 813 A1

**Beschreibung**

Die Erfindung betrifft ein Verfahren zur Aufarbeitung von Minenwässern.

Im Bergbau fallen in unterschiedlichsten Aufbereitungsverfahren, wie beispielsweise beim Mahlen oder Flotieren des abgebauten Gesteins, oder bei der Veredelung des Materials verschiedenste Prozess- und Aufbereitungswässer an. Diese enthalten neben Gangart auch Chemikalien, welche bei der Aufbereitung zugesetzt werden, und werden derzeit in großen Mengen in Speichereinrichtungen geleitet.

Mit der Zeit sinkt aufgrund fortschreitender chemischer Reaktionen der pH-Wert in den gespeicherten Prozess- und Aufbereitungswässern ab und Metallionen, welche toxisch sein können, werden aus der Gangart herausgelöst, die sich in der Flüssigphase anreichern.

Weiterhin ist ein Abwasserstrom zu berücksichtigen, der sich zusammensetzt aus einerseits Abwässern aus aktiven und bereits aufgegebenen Tief- und Tagebaugruben und andererseits Sickerwasser aus Aufbereitungsrückständen, Abraum und anderen mineralischen Abfallmengen. Dieser Abwasserstrom ist durch einen niedrigen pH-Wert und einen hohen Sulfatgehalt gekennzeichnet und enthält gelöste Metalle unterschiedlicher Art.

Daher wird der Abwasserstrom auch als "saurer Minenablauf" (acid mine drainage AMD) oder "saurer Gesteinsablauf" (acid rock drainage ARD) bezeichnet.

Er entsteht durch Oxidation sulfidischer Minerale aufgrund einer Infiltration mit Oberflächenwasser, Grundwasser und Sauerstoff aus der Luft, wie auch einer Aktivität von Sulfidoxidierenden Bakterien wie Acidothiobactillus ferrooxidans und Acidothiobactillus thiooxidans.

Die Prozess- und Aufbereitungswässer vor und während der Speicherung sowie der Abwasserstrom werden, einzeln oder auch in Mischung miteinander, nachfolgend vereinfachend als Minenwässer bezeichnet. Auch mitumfasst als Minenwässer sollen auch mit anderen Verfahren, beispielsweise einer Membranfiltration, aufkonzentrierte Minenwässer.

Aufgrund stetig steigender Preise für Frischwasser und einem wachsenden Bewusstsein für das Umweltrisiko, das derartige Minenwässer z.B. im Hinblick auf eine Verunreinigung von Oberflächen- und Grundwasser darstellen, gewinnt das Thema Aufbereitung von Minenwässern und Nutzung als Frisch-und/oder Brauchwasserquelle ständig an Bedeutung.

Es sind bereits diverse Aktiv- und Passivtechnologien bekannt, Minenwässer zu behandeln.

Bei einem als "lime treatment" bezeichneten Verfahren zur Behandlung von Minenwässern wird ein kalkhaltiges Reagenz als Kalkstein oder Löschkalk, beispielsweise in Form von Kalkmilch, d.h. einer Mischung von abgelöschtem Kalk mit Wasser bis zu dem Grade der Dünnflüssigkeit der Milch, den zu behandelnden Minenwässern zugegeben (Kalk- bzw. Gipsfällung).

Dabei wird eine Ausfällung von Sulfatmineralien, insbesondere in Form von Gips, sowie Mischmineralien, die hydroxidische Metallverbindungen oder hydroxysulfatische Metallverbindungen enthalten bewirkt.

Dieses "lime treatment" erfordert große Mengen Kalkstein oder Löschkalk, was die ökonomische Effizienz dieses Verfahrens mindert. Da auch die gelösten Metalle als Hydroxide oder bei der Gipsfällung copräzipitiert werden, entsteht ein Mischschlamm, der erhöhte Deponierungskosten verursacht. Weiter besteht hier auch die Gefahr einer Remobilisierung der Metalle, da die Metalle als hydroxidische oder hydroxysulfatische Mischmineralien gefällt werden, die remobilisierbar sind.

In der Veröffentlichung "Mine water treatment by membrane filtration processes - Experimental investigations on applicability", von A. Rieger et al., präsentiert auf der Konferenz zu Membranen in der Trinkwassererzeugung und der Abwasserbehandlung vom 20.- 22.10.2008 in Toulouse, Frankreich, siehe "Desalination and Water Treatment", 6 (2009)54-60, www.deswater.com, sind als bevorzugte Behandlungsverfahren folgende beschrieben:

Erstens wird eine Behandlung der Minenwässer durch eine Belüftung mit anschließender Zugabe eines alkalischen Stoffs wie Kalk, Kalkstein, Natronlauge oder Flugasche beschrieben. Dabei wird eine Ausfällung von Metallhydroxiden und mineralischen Phasen in Form von Gips aus den Minenwässern bewirkt. Die Ausfällungen werden sedimentiert oder filtriert, wobei große Mengen an Schlamm anfallen, der deponiert werden muss. Das behandelte Wasser enthält große Mengen an Sulfaten, so dass eine unmittelbare Wiederverwendung oder Einleitung in ein Abwassersystem nicht in Frage kommt.

Zweitens wird eine Behandlung der Minenwässer durch biologische Behandlung mittels anaerober Pflanzenkläranlagen ("constucted" oder "natural wetlands") durch Sulfatreduzierende Bakterien beschrieben. Die Reinigungswirkung dieser "constructed" oder "natural wetlands" basiert auf der Sulfatreduzierung zu Sulfid durch Mikroorganismen und der damit einhergehenden Fällung von Metallsulfiden. Dies ist ein kostengünstiger, jedoch langsam verlaufender Prozess, weshalb dieses Behandlungsverfahren befriedigende Abbaugrade nur mit hohen Verweilzeiten und folglich hohem Flächenbedarf erreicht. Eine Rückgewinnung oder Wiederverwendung des in den Minenwässern enthaltenen Wassers unterbleibt.

Weiterhin wird eine Behandlung der Minenwässer mittels einer Membranfiltration, insbesondere einer Nanofiltration oder Umkehrosmose, vorgeschlagen. Es handelt sich dabei um Filterprozesse, die unter Druck stattfinden, wobei ein Aufgabestrom an Minenwässern in zwei Teilströme aufgespalten wird.

Bei dem ersten gebildeten Teilstrom handelt es sich um das sogenannte Permeat, hier in Form eines überwiegenden Teils des Wassers aus dem Aufgabestrom, das durch die semipermeablen Membrane gelangt. Das Permeat bildet ein niedrig mineralisiertes Prozesswasser mit saurem pH-Wert im Bereich von üblicherweise etwa pH = 4 bis 5. Es kann in dieser Form - gegebenenfalls unter Berücksichtigung gültiger Gesetzgebung bzw. Vorschriften, wie insbesondere lokale Abwasservorschriften, - in die Umwelt abgegeben werden, beispielsweise in ein fließendes Gewässer oder verbrauchtes Leitungswasser.

Das Permeat wird aber bevorzugt neutralisiert und/oder mit anderen Wässern, beispielsweise frischem Leitungswasser, gemischt und verdünnt, um es als Prozesswasser wiederzuverwenden.

Bei dem zweiten Teilstrom handelt es sich um das Konzentrat, das einen kleinen Rest des Wassers mit den im Aufgabestrom im Wesentlichen enthaltenen Verunreinigungen umfasst.

Es ist Aufgabe der Erfindung, ein effizientes Verfahren zur industriellen Aufarbeitung von Minenwässern aus Bergbaubetrieben bereitzustellen.

Die Aufgabe wird gelöst durch ein Verfahren zur Aufarbeitung von Minenwässern mit den Merkmalen gemäß dem unabhängigen Patentanspruch.

Einem aufzuarbeitenden Minenwasser wird zuerst zumindest einmal ein härtefreies, alkalisches Reagenz (härtefreie Metallfällungschemikalie oder auch nur Metallfällungschemikalie) zugegeben. Dabei wird ein Mischkonzentrat erzeugt, aus welchem - in dem Minenwasser vorhandene - Metalle als Hydroxide gefällt bzw. ausgefällt werden (Metallfällung).

Solche Metalle sind insbesondere Aluminium, Kobalt, Kupfer, Eisen, Nickel, Blei und Zink, welche als entsprechende Hydoxide ausfällbar sind. Hinsichtlich einer Löslichkeit ist aber der amphotere Charakter von Metallen zu beachten.

So zeigen Metalle, wie Zink und Aluminium, hinsichtlich der ph-abhängigen Löslichkeit Bereiche, in denen die als Hydroxide immobilisierten Metallionen wieder remobilisiert werden können.

Dazu kann das Mischkonzentrat in ein Absetzbecken überführt werden, in welchem das ausgefällte Metallhydroxid als Metallschlamm sedimentiert.

Das Überlaufwasser des Absetzbeckens, d.h. das metallfreie Minenwasser nach der Metallfällung, kann aufgefangen und weiterverwendet werden.

Unter einem härtefreien, alkalischen Reagenz soll dabei jede Lauge verstanden werden, welche keine Härtebildner, wie Magnesium und/oder Calcium, enthält. Beispielsweise kann ein solches härtefreie, alkalische Reagenz eine Natronlauge oder eine Kalilauge sein.

Dem nun metallfreien, aufzuarbeitenden Minenwasser wird erfindungsgemäß danach, d.h. nach der Metallfällung, eine härtebildende Fällungschemikalie, wie ein kalkhaltiges Reagenz/Chemikalie, beispielsweise als kalkhaltige Suspension, insbesondere als eine Kalksuspension oder eine Löschkalksuspension, beispielweise in Form von Kalkmilch, zugegeben. Auch kann die härtebildende Fällungschemikalie eine Magnesium - Verbindung oder eine Kalzium - Magnesium - Mischverbindung sein.

Dabei wird ein weiteres Mischkonzentrat erzeugt, aus welchem Gips, insbesondere in Form von Gipsschlamm, ausgefällt wird (Gipsfällung / Sulfatfällung).

Dazu kann das Mischkonzentrat auch hier in ein (weiteres) Absetzbecken überführt werden, in welchem der ausgefällte Gips als Gipsschlamm sedimentiert.

Der ausgefällte Gips bzw. der ausgefällte Gipsschlamm liegt dabei in weitgehend reiner Form vor, d.h. er ist auf Grund der zuvor durchgeführten Metallfällung metallfrei, und kann insbesondere als unbelastetes Füllmaterial, beispielsweise bei Bergbaubetrieben, weiterverwendet oder anderweitig deponiert werden.

Das Überlaufwasser des weiteren Absetzbeckens, d.h. das Minenwasser nach der Gipsfällung, kann auch aufgefangen und ebenfalls weiterverwendet werden.

So kann es beispielsweise - gegebenenfalls unter Durchführung weiterer Prozessschritte - noch aufzubereitenden Minenwässern wieder beigemischt und/oder als Frischwasser abgetrennt und/oder auch für eine Rückgewinnung von Prozesslösungen, insbesondere der härtefreien Metallfällungsreagenzien bzw. Metallfällungschemikalien, weiterverwendet werden.

Vereinfacht ausgedrückt, erfolgt bei der Erfindung eine sequenzielle Abtrennung der Metalle und des Sulfates durch jeweilige Fällung mittels entsprechender Fällungschemikalien (härtefreie Metallfällungschemikalien und härtebildenden Fällungschemikalien).

Dabei werden zunächst die Metalle durch Zugabe des härtefreien, alkalischen Reagenz als Hydroxide (Me(OH)n) gemäß Gleichung (1) und anschließend das Sulfat durch Zugabe des härtebildenden bzw. kalkhaltigen Reagenz, insbesondere als kalkhaltige Suspension, als Gips ($CaSO_4 \cdot 2H_2O$) gemäß Gleichung (2) gefällt.

$$Me^{n+}(aq) + nNaOH \leftrightarrow Me\,(OH)\,n\downarrow + Na^+\,(aq) \qquad \text{Gleichung (1):}$$

$$SO_4^{2-}\,(aq) + Ca\,(OH)_2\,(aq) \leftrightarrow CaSO_4 \times 2H_2O\downarrow + 2OH^-\,(aq) \qquad \text{Gleichung (2):}$$

Anschaulich gesehen, basiert damit die Erfindung auf der Erkenntnis, dass durch sequenzierte Fällung, d.h. die zuerst durchgeführte Metallfällung mit anschließender Gips- bzw. Sulfatfällung bei dem aufzuarbeitenden Minenwasser, die Copräzipitation der Metalle, wie sie beispielsweise beim "lime treatment" auftritt, umgangen wird.

Man erhält dabei bei der Erfindung aus der Sulfatfällung einen nahezu reinen Gipsschlamm, welcher im Vergleich zu mit Metallen belastetem Gipsschlamm, wie er beispielsweise beim "lime treatment" auftritt, kostengünstiger deponiert werden kann.

Der Verbrauch der Fällungschemikalien, wie härtefreies, alkalisches sowie härtebildendes Reagenz, richtet sich nach der Zusammensetzung des aufzuarbeitenden Minenwassers sowie dem Löslichkeitsgleichgewicht der zu fällenden Komponente.

Das Löslichkeitsgleichgewicht beschreibt gemäß Gleichung (3) mit dem temperaturabhängigen Löslichkeitsprodukt $K_L^{i,j}(a,T)$ und der Aktivität (Konzentrationsmaß) a die maximal lösliche Menge an lösbaren Ionen i und j bis es zur Ausfällung des Salzes $[i]^+[j]^-$ kommt.

Für Metalle im Besonderen sind die Speziation des Metallions, der ph-Wert und das Redoxpotential ebenso relevant. Außerdem lässt das Löslichkeitsgleichgewicht Rückschlüsse auf die theoretisch notwendige Menge an Fällungschemikalie zu.

$$\text{Gleichung (3): } K_L^{i,j}(a,T) = a_i \times a_j$$

Überträgt man Gleichung (3) auf die erfindungsgemäßen Anwendungen, d.h. die Metall- und Gipsfällung, nach Gleichungen (1) und (2), so erhält man Gleichung (4) für die Metallfällung und Gleichung (5) für die Gipsfällung:

$$\text{Gleichung (4): } K_L^{Me(OH)_n}(a,T) = a_{ME^{n+}} \times a^n_{OH^-}$$

$$\text{Gleichung (5): } K_L^{CaSO_4}(a,T) = a_{Ca^{2+}} \times a_{SO_4^{2-}}$$

Die Selektivität der Metallfällung wird durch die Einstellung des ph-Wertes in dem aufzuarbeitenden Minenwasser erreicht. Der formale Zusammenhang ergibt sich dabei durch das Logarithmieren von Gleichung (3) und Substitution des pOH mit (pH + pOH = $pK_W$ (temperaturabhängiges Ionenprodukt (bei Standardbedingungen Wert 14)) zu Gleichung (6):

$$\text{Gleichung (6):}$$

$$pK_L^{ME(OH)_n}(a,T) = \log_{10} a_{ME}^{n+} + n\log_{10} a_{ME}^{n+} - n \times (14 - pH)$$

Hieraus lässt sich nun durch Auflösen der Gleichung (6) nach pH bzw. nach dem (Ziel-)pH Wert, die dann zur Einstellung dieses ph bzw. des (Ziel-)ph-Wertes notwendige Menge an härtefreiem, alkalischem Reagenz berechnen, um jeweils selektierte Metalle auszufällen.

Zur Ermittlung des Bedarfs an Fällungschemikalie müssen der Neutralisationsbedarf bis zum Erreichen des Fällungs-pH-Wertes und der Fällungsbedarf errechnet werden.

Der Neutralisationsbedarf (NB) ergibt sich aus der Differenz des aktuellen pH-Wertes der Lösung und des Fällungs-pH-Wertes des betreffenden Metallhydroxides:

$$\text{Gleichung (7):} \quad \Delta a_{OH^-,NB} = 10^{-(pK_W - pOH)}$$

Die ermittelte Aktivitätsdifferenz $\Delta a_{OH^-,NB}$ zum Erreichen des Fällungs-pH-Wertes ergibt durch Multiplikation mit dem zu neutralisierenden Wasservolumen $V_{MW}$ die Stoffmenge an hinzuzufügenden Hydroxidionen.

Bei beispielsweise bekannter Aktivität $a_{NaOH}$ einer verwendeten Natronlauge kann die für die Neutralisation notwendige Menge der Natronlauge theoretisch berechnet werden.

Ein Sicherheitszuschlag S ist üblich, da die Realität selten der Theorie entspricht. Abweichungen ergeben sich u. a. aus dem Umstand, dass die genaue Zusammensetzung selten bekannt ist und Nebenreaktionen auftreten.

Gleichung (8):

$$V_{NaOH,NB} = S \cdot \frac{V_{MW} \cdot \Delta a_{OH^-,NB}}{a_{NaOH}} = 10^{-(pK_W - pOH)} \cdot \frac{S \cdot V_{MW}}{a_{NaOH}}$$

Der Fällungsbedarf (FB) ergibt sich aus der Stöchiometrie der Gleichung (1) für die entsprechende Metallionenart. Für ein Metallion $Me^{n+}$ sind zur Bildung des Metallhydroxids (und damit Fällung als Metallhydroxidionen) n Hydroxidionen notwendig. Bei bekannter Aktivität des betreffenden Metalls kann die Aktivitätsdifferenz zur Fällung theoretisch wie folgt berechnet werden:

$$\text{Gleichung (9):} \quad \Delta a_{OH^-,FB} = n \cdot a_{ME^+}$$

Das notwenige Volumen an Lauge kann bei bekannter Aktivität der Lauge wie folgt berechnet werden:

Gleichung (10):

$$V_{NaOH,FB} = S \cdot \frac{V_{MW} \cdot \Delta a_{OH^-,FB}}{a_{NaOH}} = S \cdot V_{MW} \cdot n \cdot \frac{A_{ME^+}}{a_{NaOH}}$$

Auch hier ist die Einführung eines Sicherheitsfaktors sinnvoll. Zum einen ist die Aktivitätsbestimmung des zu fällenden Metalls umständlich und man greift auf eine Konzentrationsbestimmung zurück. Weiterhin ist eine analytische Bestimmung stets fehlerbehaftet. Außerdem werden die Metalle nicht als Hydroxide sondern als häufig komplexere Mischverbindungen gefällt, die mitunter einen höheren oder niedrigeren Bedarf an Hydroxidionen haben. Der Bedarf ist im Einzelfall durch experimentelle Untersuchungen zu ermitteln.

Der Gesamtbedarf einer Fällungsstufe für eine Metallart ergibt sich aus der Summe des Neutralisiations- und Fällungsbedarfes der Einzelstufen.

Die Menge an hinzuzufügender härtebildenden Fällungschemikalie - hier ohne Beschränkung darauf gezeigt für eine Kalksuspension - ist abhängig von der Ca-Aktivität der Suspension und vom Sulfatgehalt des zu behandelnden Wassers, Die theoretisch mögliche lösliche Sulfat- bzw. Gipsmenge folgt aus Gleichung (2).

Da $Ca^{2+}$ und $SO_4^{2-}$ im Gips im stöchiometrischen Verhältnis (1:1) vorliegen, folgt für die maximal lösliche Sulfatmenge:

$$\text{Gleichung (11):} \quad a_{SO_4^{2-},KL} = \sqrt{K_{L,CaSO_4 \cdot 2H_2O}}$$

Die Aktivität des Sulfates des zu behandelnden Wassers ist bekannt aus analytischen Untersuchungen und es folgt, dass die Sulfatmenge entsprechend dem Gipsgleichgewicht um die Aktivitätsdifferenz

$$\text{Gleichung (12): } \Delta a_{SO_4^{2-}} = a_{SO_4^{2-},MW} - a_{SO_4^{2-}-KL}$$

reduziert werden kann. Die notwendige Menge an $Ca^{2+}$, die zur Fällung notwendig ist, stimmt mit der Aktivitätsdifferenz überein. Das Volumen an hinzuzufügender Kalkmilchsuspension kann bei bekannter Ca-Aktivität der Suspension berechnet werden zu:

$$\text{Gleichung (13):}$$

$$V_{Ca(OH)_2,FB} = S \; \frac{V_{MW} \; \Delta a_{SO_4^{2-}}}{a_{Ca(OH)_2}}$$

Auch hier wurde wieder ein Zuschlagfaktor S eingeführt, der Nebenreaktionen, analytische Genauigkeit und die Verwendung von Konzentrationen an Stelle von Aktivitäten berücksichtigt. Es ist auch hier wieder anzumerken, dass die Fällung von Gips eine starke Vereinfachung darstellt. Es werden immer auch andere Verbindungen in Abhängigkeit von der Zusammensetzung des zu behandelnden Minenwassers gefällt.

Mit der Zuführung der Kalkmilchsuspension wird der pH-Wert weiter angehoben. Die Menge an zugefügten Hydroxidionen aus der Zuführung der Kalkmilch in der Sulfatfällung entspricht aufgrund der Stöchiometrie von $Ca(OH)_2$:

$$\text{Gleichung (14): } \Delta a_{(OH)^-} = 2\Delta a_{SO_4^{2-}}$$

D.h., dass der pH-Wert nach der Gipsfällung (GF) im Vergleich zum pH-Wert der letzten Metallfällungsstufe (MF) den folgenden theoretischen Wert annimmt.

$$\text{Gleichung (15): } pH_{GF} = pH_{MF} + lg(\Delta a_{OH}^-) = pH_{MF} + lg(2\Delta a_{SO_4^{2-}})$$

Die hier zusätzlich hinzugefügten Hydroxidionen werden dann zusammen mit den mit der härtefreien Lauge hinzugefügten Kationen (für NaOH also beispielsweise $Na^+$) in der folgenden NF-Stufe zurückgewonnen.

Will man eine "vollständige" Rückgewinnung erzielen, ist es u.U. notwendig, mehr $Ca(OH)_2$ zuzudosieren, als zur Gipsfällung notwendig. Das ist aber im Einzelfall zu ermitteln und von der Zusammensetzung des zu behandelnden Wassers abhängig.

Diese - als Metallhydroxide - ausgefällten Metalle können wiederverwendet werden. So können diese bevorzugt als Wertstoffe an die Industrie verkauft werden.

Des Weiteren erweist sich bei der Erfindung von Vorteil, dass - auf Grund der zunächst ausgefällten Metalle bzw. mangels Vorhandensein von Metallen in dem aufzuarbeitenden Minenwasser nach der Metallfällung - damit die Bildung von hydroxidischen Metallverbindungen bei der nachfolgenden Gipsfällung ausgeschlossen ist. Eine Remobilisierung von Metallen, wie sie bei dem bekanntem "lime treatment" im Gipsschlamm auftreten kann, ist ausgeschlossen.

Bevorzugte Weiterbildungen der Erfindung ergeben sich aus den abhängigen Ansprüchen.

Bevorzugt kann die Metallfällung in nur einem Schritt erfolgen. Hier werden durch "einmalige" Fällung mittels einmal zugegebener Fällungschemikalie, d.h. des härtefreien, alkalischen Reagenz, beispielsweise Natron- oder Kalilauge, alle Metalle gleichzeitig in einem Schritt ausgefällt bzw. abgetrennt. Dabei ist aber zu beachten, dass Metalle mit amphoterem Charakter in diesem Bereich wieder in Lösung gehen können.

Dies erfolgt geeignet dadurch, dass die Metallfällung bei einem vorgegebenen bzw. einstellbaren ph-Wert bzw. ph-Wert-Bereich, beispielsweise um bzw. von über 8, erfolgt, wodurch alle Metalle gleichzeitig ausgefällt werden können.

Die Einstellung dieses pH-Werts bzw. ph-Wert-Bereiches erfolgt durch entsprechende Zugabe bzw. Zugabe einer entsprechenden Menge der (Metall-)Fällungschemikalie.

Alternativ kann die Metallfällung auch in mehreren, sequenziellen Schritten erfolgen. Hier werden durch fraktionierte Fällung mittels mehrfach entsprechend zugegebener Fällungschemikalie, d.h. des härtefreien, alkalischen Reagenz, beispielsweise Natron- oder Kalilauge, bei unterschiedlichen ph-Werten bzw. in unterschiedlichen ph-Wert-Bereichen - selektiv - Metalle abgetrennt. Die Selektivität der Metallfällung wird durch Einstellung des ph-Wertes erreicht.

Besonders bevorzugt kann vorgesehen sein, dass die fraktionierte Metallfällung bei aufsteigenden ph-Werten/ph-Wert-Bereichen erfolgt, wobei jeder ph-Wert/ph-Wert-Bereich selektiv für ein bestimmtes Metall eingestellt ist.

So kann vorgesehen sein, dass in einem ersten Metallfällungsschritt bei einem ph-Wert von ca. 3,8 Eisen, in einem zweiten Metallfällungsschritt bei einem ph-Wert von ca. 4 bis 4,5 Aluminium und in einem dritten Metallfällungsschritt bei einem ph-Wert von ca. 8 Kupfer gefällt werden.

Die Einstellung des jeweiligen pH-Wertes erfolgt durch Zugabe der entsprechenden Menge der Fällungschemikalie.

Auch kann das Minenwasser nach der Gipsfällung (Effluent der Gipsfällung), beispielsweise als (aufgefangenes) Überlaufwasser des weiteren Absetzbeckens, weiterverwendet werden. So kann es beispielsweise noch aufzubereitenden Minenwässern beigemischt werden.

Bevorzugt allerdings kann das Minenwasser nach der Gipsfällung bzw. der Effluent der Gipsfällung für die Rückgewinnung der Prozesslösungen, insbesondere der härtefreien Metallfällungsreagenzien/-chemikalien, weiterverwendet werden, wobei gegebenenfalls zuvor - bei Notwendigkeit - eine Abscheidung nicht sedimentierter suspendierter Partikel durch Multimedia-oder Ultrafiltration durchlaufen werden kann.

Besonders bevorzugt kann diese Rückgewinnung von Prozesslösungen aus dem Effluent durch Integration von druckgetriebenen Membranverfahren, wie zum Beispiel Nanofiltration und/oder Umkehr-Osmose, geschehen, wodurch eine sogenannte "Zero-Liquid-Discharge"-Fahrweise erreicht wird.

So kann im Speziellen der Effluent der Gipsfällung zu einer Aufkonzentration (auch Aufkonzentrierung) des Sulfats bzw. der Gipslösung verwendet werden.

Bei einer solchen Sulfataufkonzentration kann das Minenwasser nach der Gipsfällung, beispielsweise mittels einer Fördereinrichtung, einem Membranfiltermodul zu einer druckgetriebenen Membranfiltration, insbesondere einer Nanofiltration, zugeführt werden, wobei zuvor - bei Notwendigkeit - die Abscheidung nicht sedimentierter suspendierter Partikel durch Multimedia- oder Ultrafiltration durchlaufen werden kann.

Dadurch wird das membran- bzw. nanofiltrierte Minenwasser in die zwei Teilströme aufgespaltet, in das Permeat und in das Konzentrat.

Die Nanofiltration ist als Membranverfahren u.a. selektiv für die Abtrennung monovalenter Ionen im Permeat und polyvalenter Ionen im Konzentrat. Der durch das Löslichkeitsgleichgewicht bestimmte Restsulfatgehalt im Effluenten der Gipsfällung wird durch Permeation des Lösungsmittels und Rückhalt mehrwertiger Ionen im Nanofiltrationsschritt über das Löslichkeitsgleichgewicht - im Konzentrat - aufkonzentriert und in die Gipsfällung zurückgeführt (rezirkuliert), in der eine erneute Gipsfällung initiiert wird.

Hierdurch kann der Einsatz des härtebildenden bzw. der kalkhaltigen Reagenz bzw. Gipsfällungschemikalie verringert - und damit folglich Kosten, insbesondere Transportkosten der Gipsfällungschemikalie, reduziert werden.

Das Permeat stellt eine alkalische wässrige Lösung dar, die von den monovalenten Ionen des Metallfällungsreagenz, beispielsweise von $Na^+$ und $OH^-$ Ionen, dominiert wird. Weitere monovalente Ionen resultieren aus der Zusammensetzung des aufzuarbeitenden Minenwassers und mindern die Qualität der alkalischen wässrigen Lösung als zurückgewinnbares bzw. zurückgewonnenes Metallfällungskonzentrat, welches nach qualitätsabhängiger Vermischung mit "frischem" Metallfällungsreagenz bzw. frischem härtefreien, alkalischem Reagenz der Metallfällung zugeführt werden kann.

Da härtefreie, alkalische Reagenzien bzw. Fällungschemikalien, wie die Natronlauge, bei der Behandlung von aufzuarbeitenden Minenwässern bis dato auf Grund von im Vergleich zur reinen Gipsfällung hohen Kosten nicht oder in geringem Umfang eingesetzt werden, kann durch die Rückgewinnung der Metallfällungschemikalie, insbesondere der Natronlauge, die höheren Kosten dieser wieder ausgeglichen werden.

Um große Mengen an Permeat zu erzeugen, ist es bevorzugt, wenn dem Membranfiltermodul das Minenwasser nach der Gipsfällung mit einem Druck im Bereich von 10 bis 30 bar zugeführt wird. Mit steigendem Druck steigen auch die erzielbaren Permeatmengen.

Das Membranfiltermodul ist insbesondere derart aufgebaut, dass eine Strömungsrichtung der Minenwässer beim Durchströmen des Membranfiltermoduls sich mindestens zweimal abrupt um 180° ändert, um die turbulente Strömung zu erzeugen. Dies kann durch eine abrupte Umkehrung der Strömungsrichtung oder einen Einbau von Verwirbelungselementen im Strömungsverlauf erfolgen.

Auf dem Markt werden für den industriellen Gebrauch ausgelegte Membranfiltermodule, beispielsweise von der Firma Pall GmbH, 63303 Dreieich, angeboten.

Sie dienen laut Hersteller zur Aufbereitung und Enthärtung von Grundwasser, Entsalzung von Meerwasser, Filterung und Reinigung von Sickerwasser aus Mülldeponien, Filterung und Enthärtung von Oberflächenwasser, und Behandlung industrieller Abfälle und Abschlämmen aus Kesseln von Kühltürmen.

Die unter der Bezeichnung Pall Disc Tube® angebotenen Membranfiltermodule weisen einen idealen Aufbau zur Erzeugung einer turbulenten Strömung im das Membranfiltermodul durchströmenden Fluid auf und sind daher überraschender Weise auch zum Einsatz in einer Membranfilteranlage zur Aufarbeitung von Minenwässern gemäß dem weitergebildeten erfindungsgemäßen Verfahren einsetzbar.

Das Minenwasser nach der Gipsfällung strömt hier an strömungstechnisch in Serie geschalteten, voneinander durch Trennplatten beabstandeten und parallel ausgerichteten scheibenförmigen Membranfiltern entlang und werden im Bereich der Kanten der Membranen um 180° umgelenkt, so dass eine turbulente Strömung entsteht.

Bevorzugt umfasst das Membranfiltermodul mindestens eine Nanofiltermembrane. Dabei haben sich Membranen vom Typ Alfalaval NF99 als besonders geeignet erwiesen.

Nach einer weiteren bevorzugten Weiterbildung kann die Rückgewinnung der Metallfällungschemikalie weiter verbessert werden, indem das Permeat der (ersten) Membranfiltration (Aufkonzentration der Gipslösung) einer weiteren Membranfiltration zu einer Aufkonzentration des härtefreien, alkalischen Reagenz, d.h. der Metallfällungschemikalie, unterzogen wird.

Bei einer solchen Aufkonzentration der Metallfällungschemikalie kann das Permeat nach bzw. aus der ersten Membran- bzw. Nanofiltration, beispielsweise mittels einer Fördereinrichtung, einem weiteren Membranfiltermodul zu einer druckgetriebenen Membranfiltration, insbesondere einer Umkehr-Osmose, zugeführt werden.

Die Umkehr-Osmose ist als Membranverfahren u.a. selektiv für die Abtrennung monovalenter und polyvalenter. Die Fällungschemikalie bzw. deren (monovalente) Ionen, beispielsweise $Na^+$ und $OH^-$, wird bzw. werden durch Permeation des Lösungsmittels und Rückhalt einwertiger Ionen im Umkehr-Osmose-Schritt über das Löslichkeitsgleichgewicht - im Konzentrat - aufkonzentriert und in die Metallfällung zurückgeführt (rezirkuliert), in der eine erneute Metallfällung initiiert wird.

Hierdurch, d.h. diese Rückgewinnung des härtefreien, alkalischen Reagenzes bzw. der Metallfällungschemikalie durch deren Aufkonzentration, können deren erhöhte Kosten wieder ausgeglichen werden.

Das Permeat stellt nach diesem Umkehr-Osmose-Schritt Frischwasser dar. Zur Erreichung einer trinkbaren Qualität ist dieses Frischwasser gegebenenfalls weiter zu behandeln, um die von einer Gesetzgebung, insbesondere von lokalen Abwasservorschriften, bestimmten Grenzwerte für Trinkwasser einzuhalten.

Diese erfindungsgemäße Vorgehensweise, insbesondere auch deren bevorzugte Weiterbildungen, ermöglicht somit eine saubere Trennung der in den Minenwässern enthaltenen Stoffe einmal in Wasser in trinkbarer Qualität bzw. Frischwasser, andererseits - industriell weiterverarbeitbare - Metalle und weiterhin reinen Gips, so dass jeweils eine gezielte Weiterverwendung ohne das Risiko einer Umweltgefährdung möglich ist.

Das abgetrennte Frischwasser - insbesondere als Permeat der Umkehr-Osmose - wird, vorzugsweise nach einer Neutralisation oder Beimischung von Leitungswasser, zur Bildung von Prozess-und/oder Aufbereitungswässern in einem die Minenwässer hervorbringenden Bergbaubetrieb verwendet. Es kann beispielsweise kostensparend zum Bohren, Fräsen, Mahlen, Flotieren usw. eingesetzt werden. Auch kann es als trinkbares Frischwasser weiterverwendet werden.

Bevorzugt allerdings kann das Frischwasser wiederum zur Bildung des kalkhaltigen Reagenz, insbesondere der kalkhaltigen Suspension, wie der Kalkmilch, und/oder des härtefreien, alkalischen Reagenz, insbesondere der Natron- oder Kalilauge, verwendet werden.

Des Weiteren erweist sich hier als Vorteil, dass ohne eine derartige Abtrennung des Frischwassers - insbesondere als "reines" Permeat der Umkehr-Osmose - es zu einem Überlauf des bzw. der Absetzbecken kommt. Andernfalls wäre eine kostenintensive "Überdimensionierung" der Absetzbecken notwendig.

Der ausgefällte Gips bzw. der ausgefällte Gipsschlamm liegt erfindungsgemäß in weitgehend reiner Form vor, d.h. er ist auf Grund der zuvor durchgeführten Metallfällung metallfrei, und kann insbesondere als Füllmaterial, beispielsweise bei Bergbaubetrieben, weiterverwendet oder anderweitig deponiert werden.

Weiterhin lässt sich die Erfindung dahingehend weiterbilden, dass durch den Einsatz anderer Fällungschemikalien weitere Aufbereitungsprozesse erfasst werden können. Auch ist der Einsatz von Membranverfahren mit unterschiedlichen Trenncharakteristika vorsehbar, zum Beispiel eine Ultrafiltration zur Abtrennung von gelöster Organik.

Mittels des erfindungsgemäßen Verfahrens können insbesondere Minenwässer aus Bergbaubetrieben mit sulfidischen und/oder schwefelhaltigen Mineralien oder Erzen aufgearbeitet werden.

So ist das erfindungsgemäße Verfahren insbesondere geeignet zur Aufarbeitung von "saurem Minenablauf" (acid mine drainage AMD) oder "saurem Gesteinsablauf" (acid rock drainage ARD) oder zur Aufarbeitung von mit anderen Verfahren, wie beispielsweise einer Membranfiltration, aufkonzentrierten Minenwässern. D.h., das erfindungsgemäße Verfahren kann nicht nur zur direkten Behandlung von Minenwässer eingesetzt werden, sondern auch Einsatz bei der Behandlung von Minenwasserkonzentraten, beispielsweise aus einer Direktfiltration, Verwendung finden, insbesondere da durch eine Vorfiltration eine erhebliche Reduktion des zu behandelnden Volumenstroms erfolgt. Außerdem bringt die Erhöhung der Metallgehalte eine erhöhte Wirtschaftlichkeit mit sich.

Auch kann das erfindungsgemäße Verfahren in der metallverarbeitenden Industrie bei der Aufbereitung, insbesondere von dort auftretenden metallhaltigen und/oder sulfidischen und/oder schwefelhaltigen Abwassern, eingesetzt werden.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:

FIG 1 einen ersten erfindungsgemäßen Verfahrenablauf ei-nes Verfahrens zur Aufarbeitung von Minenwässern,

FIG 2 einen zweiten erfindungsgemäßen Verfahrenablauf ei-nes Verfahrens zur Aufarbeitung von Minenwässern,

FIG 3 einen dritten erfindungsgemäßen Verfahrenablauf ei-nes Verfahrens zur Aufarbeitung von Minenwässern und

FIG 4 einen vierten erfindungsgemäßen Verfahrenablauf ei-nes Verfahrens zur Aufarbeitung von Minenwässern.

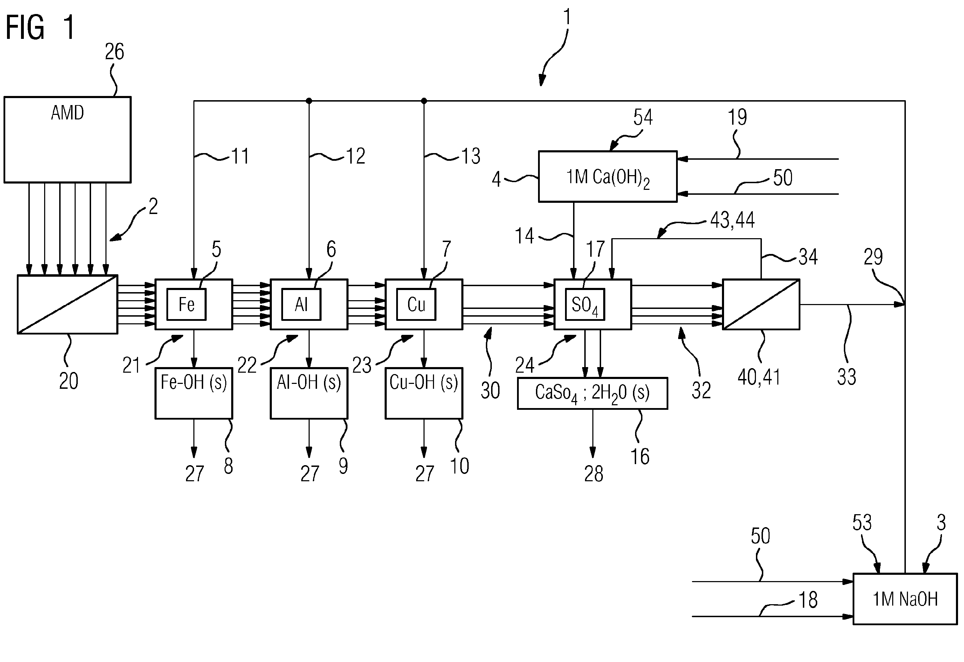

FIG 1 zeigt einen ersten erfindungsgemäßen Verfahrenablauf 1 eines Verfahrens zur Aufarbeitung von bergbaubeeinflussten Minenwässern 2 mittels sequenzieller Metall- und Gipsfällung. D.h., gemäß dem Verfahrensablauf 1 erfolgt zunächst die Metallfällung 21, 22, 23, welcher die Gipsfällung 24 - sequenziell - nachfolgt.

Das bergbaubeeinflusste Minenwasser 2, in diesem Fall ein sogenanntes AMD (acid mine drainage), wird aus einem "tailing pond" 26 oder direkt aus einem Bergwerk (nicht dargestellt) über eine Mikrofiltration 20 so aufbereitet, dass es partikelfrei ist.

Anschließend werden durch fraktionierte Fällung 21, 22, 23 mit einer Fällungschemikalie 3, hier ein härtefreies, alkalisches Reagenz, im Speziellen hier Natronlauge, bei unterschiedlichen ph-Werten des aufzuarbeitenden Minenwassers 2 Metalle 5, 6, 7 abgetrennt (Metallfällung, hier als fraktionierte Metallfällung 21, 22, 23).

Die Metallfällungschemikalie 3 bzw. die Natronlauge wird dabei durch Lösen von Natriumhydroxid 18 in Wasser 50 erzeugt 53 und der fraktionierten Fällung 21, 22, 23 zugegeben 11, 12, 13.

Die fraktionierte Metallfällung 21, 22, 23 mittels Natronlauge 3 erfolgt dabei wie dargestellt in drei sequenziellen Schritten 11, 12, 13 bzw. 21, 22, 23.

Die Selektivität der Metallfällung wird durch die Einstellung des ph-Wertes in dem aufzuarbeitenden Minenwasser 2 der jeweiligen Fraktionierungsstufe erreicht, was durch die Zugabe einer entsprechenden Menge der Natronlauge 3 zu dem aufzuarbeitenden Minenwasser 2 (der jeweiligen (Fraktionierungs-)Stufe) bewirkt wird.

Wie FIG 1 zeigt, erfolgt die fraktionierte Metallfällung 21, 22, 23 zunächst in einem ersten Metallfällungsschritt bei einem ph-Wert von ca. 3,8, wodurch Eisen 5 als hydoxidische Eisenverbindungen 8 ausgefällt wird.

Der Effluent der ersten Fraktionierungsstufe wird der zweiten Metallfällung, d.h. dem zweiten Metallfällungsschritt, zugeleitet, bei welchem bei einem ph-Wert von ca. 4 bis 4,5 Aluminium 6 als Aluminiumhydroxid 9, ausgefällt wird.

Der dabei entstehende Effluent wird weiter der dritten Metallfällung zugeführt, bei welcher bei einem ph-Wert von ca. 8 Kupfer 7 als Kupferhydroxid 10 gefällt wird.

Diese in der fraktionierten Metallfällung 21, 22, 23 - als Metallhydroxide 8, 9, 10, hydroxidische Einsenverbindungen 8, Aluminiumhydroxid 9 und Kupferhydroxid 10, - ausgefällten Metalle 5, 6, 7, Eisen 5, Aluminium 6 und Kupfer 7, werden wiederverwendet 27, indem sie als Wertstoffe an die Industrie verkauft werden.

Sequenziell nach fraktionierter Metallfällung 21, 22, 23 wird der nun metallfreie Effluent 30 der Gips-/Sulfatfällung 24 zugeführt (sequenzierte Metall-Gips-/Sulfatfällung).

Der Effluent 30 aus der fraktionierten Metallfällung 21, 22, 23 wird dazu mit Kalkmilch 4 versetzt 14 (Gips- bzw. Sulfatfällung 24), welche durch Zumischung von Wasser 50 zu Brandkalk oder abgelöschtem Kalk oder einer anderen härtebildenden Fällungschemikalie 19 gewonnen wird 54.

Der gefällte, metallfreie Gips 16 wird als unbedenklich deponierbarer Schlamm abgezogen und einer Entwässerung zugeführt 28.

Der anschließende Verfahrensschritt ist wie FIG 1 zeigt die Aufkonzentrierung 43 des Effluents 32 aus der Gipsfällung 24 bzw. die Aufkonzentrierung 43 der Gipslösung mittels druckgetriebener Membranfiltration 40, hier einer Nanofiltration 41, 41, durch eine Membranfiltrationsanlage.

Diese Membranfiltrationsanlage umfasst ein Membranfiltermodul mit einer Vielzahl an scheibenförmigen, parallel zueinander ausgerichteten Membranen.

Die Nanofiltration 41 ist als Membranverfahren 40 u.a. selektiv für die Abtrennung monovalenter Ionen im Permeat 33 und polyvalenter Ionen im Konzentrat 34.

Der durch das Löslichkeitsgleichgewicht bestimmte Restsulfatgehalt im Effluenten 32 der Gipsfällung 24 wird durch Permeation des Lösungsmittels und Rückhalt mehrwertiger Ionen im Nanofiltrationsschritt 41 über das Löslichkeitsgleichgewicht - im Konzentrat 34 - aufkonzentriert und in die Gipsfällung 24 zurückgeführt 44 (rezirkuliert), in der eine erneute Gipsfällung initiiert wird.

Hierdurch kann die Menge an Kalksuspension 4 im Vergleich zur klassischen Behandlungsmethode, "lime treatment", in Abhängigkeit des Sulfatgehalts verringert werden.

Das Permeat 33 der Nanofiltration 41 stellt eine alkalische wässrige Lösung dar, die von den monovalenten Ionen des Metallfällungsreagenz 3, hier von $Na^+$ und $OH^-$ Ionen, dominiert wird. Weitere monovalente Ionen resultieren aus der Zusammensetzung des aufzuarbeitenden Minenwassers 2 und mindern die Qualität der alkalischen wässrigen Lösung als zurückgewonnenes Metallfällungskonzentrat 3, welches nach qualitätsabhängiger Vermischung 29 mit "frischer" Natronlauge wieder der Metallfällung zugeführt wird.

Wie FIG 1 zeigt, wird dazu zunächst der Effluent 32 aus der Gipsfällung 24 dem Membranfiltermodul unter Druck, insbesondere im Bereich von 10 bis 30 bar, zugeführt.

Der Effluent 32 wird im Membranfiltermodul einer druckgetrieben Nanofiltration 40, 41 unterzogen, wobei der Effluent 32 das Membranfiltermodul überwiegend turbulent durchströmt. Als Membranen werden Nanofiltermembranen des Typs Alfalaval NF99 verwendet.

Das durch die Membrane tretende Permeat 33 der Nanofiltration 41 ist je nach Zusammensetzung des behandelten bergbaubeeinflussten Minenwassers 2 eine Natronlauge mit Verunreinigungen durch monovalente Ionen, z.B. Chlorid.

Diese zurückgewonnene Natronlauge 33 wird je nach Qualität mit Frischlauge versetzt 29 und wieder der Metallfällung 21, 22, 23 zugeführt.

Der nicht durch die Membrane tretender Rest bildet das gewonnene Konzentrat 34, welches in die Gipsfällung 24 zurückgeleitet wird 44, wodurch die Aufkonzentrierung 43 des Sulfats 17 bzw. der Gipslösung erfolgt.

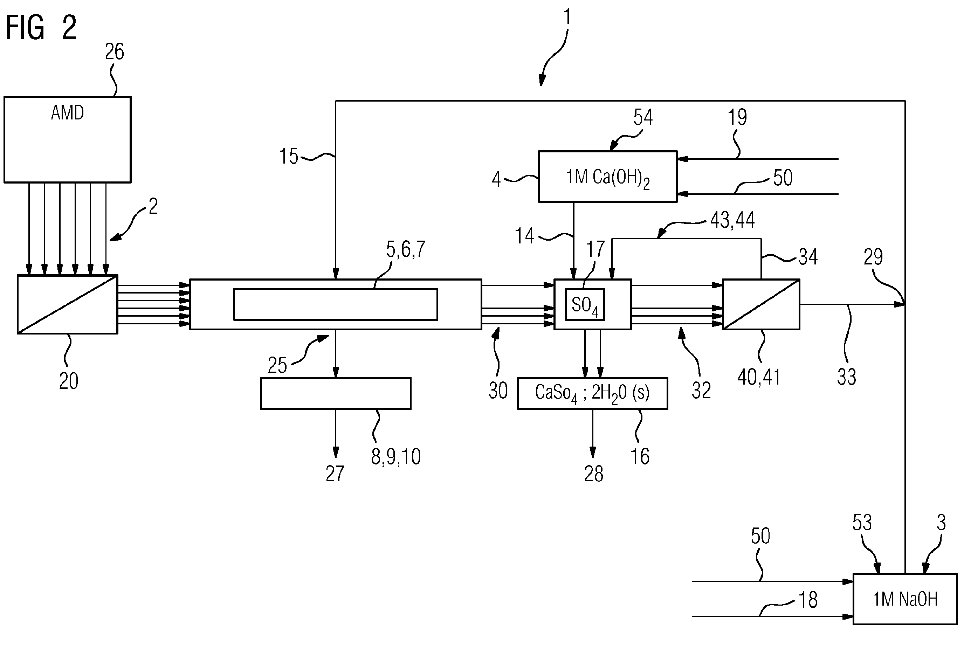

FIG 2 zeigt einen zweiten erfindungsgemäßen Verfahrensablauf 1 eines Verfahrens zur Aufarbeitung von Minenwässern 2 mittels sequenzieller Metall- 25 und Gipsfällung 24.

Gleiche Bezugszeichen wie in FIG 1 bezeichnen gleiche Elemente.

Dieser zweite erfindungsgemäße Verfahrensablauf 1 nach FIG 2 unterscheidet sich nur dahingehend von dem ersten erfindungsgemäßen Verfahrensablauf 1 nach FIG 1, als dass hier - anstelle einer fraktionierten Metallfällung 21, 22, 23 - diese Metallfällung 25 durch einen einzigen Metallfällungsschritt erfolgt.

Dem aufzuarbeitenden Minenwasser 2 wird - bei Einstellung eines ph-Wertes von ca. 8 - die Metallfällungschemikalie 3, d.h. Natronlauge, zugegeben 15, wodurch in diesem einzigen Metallfällungsschritt alle Metalle 5, 6, 7, wie Eisen 5, Aluminium 6 und Kupfer 7, als entsprechende Hydroxide 8, 9, 10 gleichzeitig ausgefällt werden 25.

Anschließend wird der Effluent 30 der Metallfällung 25 - sequenziell - ebenfalls der Gipsfällung 24 zugeführt. Anschließend erfolgen auch hier die Aufkonzentrierung 43 der Gipslösung sowie die Rückgewinnung der Natronlauge 29.

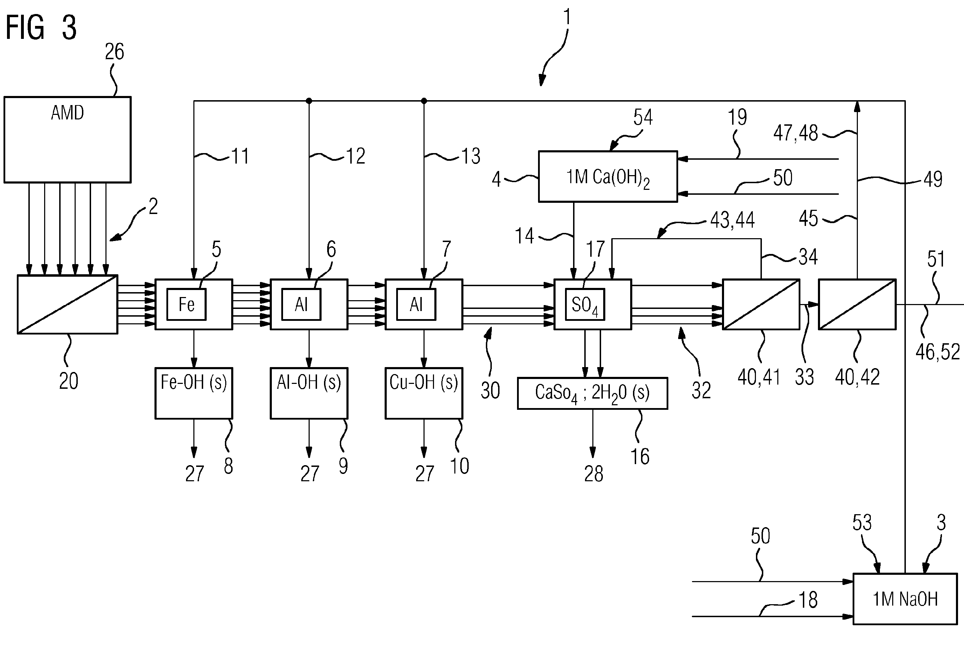

FIG 3 zeigt einen dritten erfindungsgemäßen Verfahrensablauf 1 eines Verfahrens zur Aufarbeitung von Minenwässern 2 mittels sequenzieller Metall- 21, 22, 23 und Gipsfällung 24.

Gleiche Bezugszeichen wie in FIG 1 und FIG 2 bezeichnen auch hier gleiche Elemente.

Dieser dritte erfindungsgemäße Verfahrensablauf 1 zur Aufarbeitung von Minenwässern 2 entspricht im Wesentlichen dem Verfahrensablauf 1 nach FIG 1, wobei auch hier die Metallfällung 21, 22, 23 in gleicher fraktionierter Weise - in drei sequenziellen Schritten - erfolgt.

Dieser fraktionierten Metallfällung 21, 22, 23 schließt sich ebenfalls die sequenzielle Gipsfällung 24 mit nachfolgender Aufkonzentrierung 43 der Gipslösung durch Nanofiltration 41 an.

Wie weiter FIG 3 zeigt erfolgt hier nachfolgend der Nanofiltration 41 eine weitere druckgetriebene Membranfiltration 40 in Form einer Umkehr-Osmose 42, welcher das Permeat 33 der Nanofiltration 41 zugeführt wird.

Das Konzentrat 34 der Nanofiltration 41 wird dabei wie FIG 3 zeigt wie gehabt zur Aufkonzentrierung 43 der Gipslösung verwendet 44.

Dieser anschließende Verfahrensschritt der Umkehr-Osmose 42 dient bzw. bewirkt wie FIG 3 zeigt die Aufkonzentrierung 48 der Natronlauge 3.

Die Umkehr-Osmose 42 ist als Membranverfahren 40 u.a. selektiv für die Abtrennung monovalenter und polyvalenter Ionen. Die Metallfällungschemikalie 3, d.h. die Natronlauge, bzw. deren (monovalente) Ionen, hier $Na^+$ und $OH^-$, wird bzw. werden durch Permeation des Lösungsmittels und Rückhalt einwertiger Ionen im Umkehr-Osmose-Schritt 42 über das Löslichkeitsgleichgewicht - im Konzentrat 45 - aufkonzentriert und in die Metallfällung 11, 12, 13 zurückgeführt 49 (rezirkuliert), in der eine erneute Metallfällung 21, 22, 23 initiiert wird.

Hierdurch, d.h. diese Rückgewinnung 47 der härtefreien, alkalischen Reagenz 3 bzw. der Natronlauge durch deren Aufkonzentrierung 48, können die erhöhten Kosten durch Verwendung der Natronlauge 3 wieder ausgeglichen werden.

Das Permeat 46 der Umkehr-Osmose 41 stellt nach dieser, Wasser in trinkbarer Qualität bzw. Frischwasser 52 dar, welches abgetrennt wird 51, um Wasser aus dem Kreislauf abzuziehen. Dadurch lässt sich ein Überlauf von Absetzbecken durch ständige Anreicherung von Wasser in dem Verfahrenskreislauf verhindern.

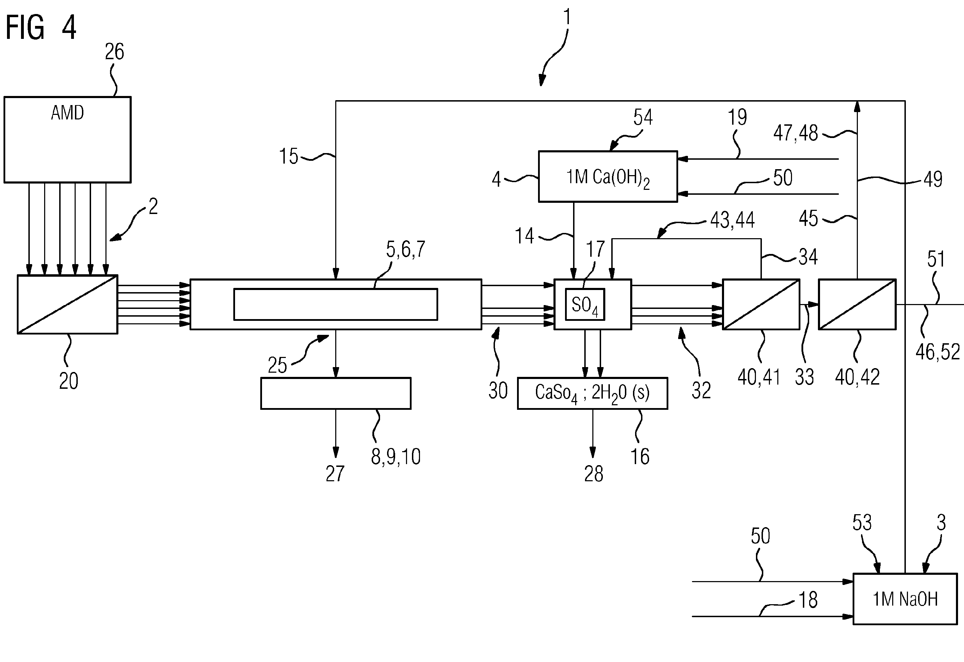

FIG 4 zeigt einen vierten erfindungsgemäßen Verfahrensablauf 1 eines Verfahrens zur Aufarbeitung von Minenwässern 2 mittels sequenzieller Metall- 25 und Gipsfällung 24.

Gleiche Bezugzeichen wie in FIG 1 - FIG 3 bezeichnen auch hier gleiche Elemente.

Der Verfahrensablauf 1 nach FIG 4 unterscheidet sich nur dahingehend von dem dritten erfindungsgemäßen Verfahrensablauf 1 nach FIG 3, als dass hier - anstelle einer fraktionierten Metallfällung 21, 22, 23 - diese Metallfällung 25 durch einen einzigen Metallfällungsschritt erfolgt.

Dem aufzuarbeitenden Minenwasser 2 wird - bei Einstellung eines ph-Wertes von ca. 8 - die Metallfällungschemikalie 3, d.h. Natronlauge, zugegeben, wodurch in diesem einzigen Metallfällungsschritt alle Metalle 5, 6, 7, wie Eisen 5, Aluminium 6 und Kupfer 7, als entsprechende Hydroxide 8, 9, 10 ausgefällt werden.

Anschließend wird der Effluent 30 der Metallfällung 25 - sequenziell - ebenfalls der Gipsfällung 24 zugeführt. Anschließend erfolgen auch hier die Aufkonzentrierung 43 der Gipslösung durch Nanofiltration 41 und Aufkonzentrierung 48 der Natronlauge 3 durch Umkehr-Osmose 42. Frischwasser 52 wird hier ebenfalls abgezogen 51, um den Überlauf der Becken zu verhindern.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Aufarbeitung von Minenwässern (1), bei dem

   - einem aufzuarbeitenden Minenwasser (2) zuerst zumindest einmal ein härtefreies, alkalisches Reaganz (3) zugegeben wird (11, 12, 13, 15), wodurch Metalle (5, 6, 7) als Hydroxide (8, 9, 10) aus dem aufzuarbeitenden Minenwasser (2) gefällt werden (Metallfällung, 21, 22, 23, 25), und
   - anschließend dem zuerst zumindest einmal mit dem härtefreien, alkalischen Reaganz (3) behandelten, aufzuarbeitenden Minenwasser (30) ein härtebildendes, insbesondere kalkhaltiges, Reagenz (4) zugegeben wird (14), wodurch ein Sulfat als Gips (16) aus dem zuerst zumindest einmal mit dem härtefreien, alkalischen Reaganz (3) behandelten, aufzuarbeitenden Minenwasser (30) gefällt wird (Gips-/Sulfatfällung, (24)).

2. Verfahren nach mindestens einem der voranstehenden Ansprüche, bei dem das härtefreie, alkalische Reagenz (3) eine härtefreie Lauge, insbesondere eine Natronlauge oder eine Kalilauge, ist.

3. Verfahren nach mindestens einem der voranstehenden Ansprüche, bei dem das härtefreie, alkalische Reagenz (3) dem aufzuarbeitenden Minenwasser nur einmal zugegeben wird (15), insbesondere wobei die Zugabe (15) der härtefreien, alkalischen Reagenz (3) derart erfolgt, dass in dem aufzuarbeitenden Minenwasser (2) durch dessen Zugabe (15) ein vorgebbarer ph-Wert-Bereich eingestellt wird, bei welchem eingestellten ph-Wert-Bereich mehrere Metalle (5, 6, 7) gleichzeitig aus dem aufzuarbeitenden Minenwasser (2) ausgefällt werden (25).

4. Verfahren nach mindestens einem der voranstehenden Ansprüche, bei dem das härtefreie, alkalische Reagenz (3) dem aufzuarbeitenden Minenwasser (2) mehrmals nacheinander zugegeben wird (11, 12, 13), insbesondere wobei jede Zugabe (11, 12, 13) der härtefreien, alkalischen Reagenz (3) derart erfolgt, dass in dem aufzuarbeitenden Minenwasser (2) durch dessen Zugabe (11, 12, 13) jeweils ein vorgebbarer ph-Wert-Bereich eingestellt wird, bei welchem jeweils eingestellten ph-Wert-Bereich selektiv Metalle (5, 6, 7) aus dem aufzuarbeitenden Minenwasser (2) ausgefällt werden (21, 22, 23).

5. Verfahren nach mindestens einem der voranstehenden Ansprüche, bei dem bei der mehrmaligen Zugabe (21, 22, 23) des härtefreien, alkalischen Reagenz (3) die jeweils in dem aufzuarbeitenden Minenwasser (2) eingestellten ph-Wert-Bereiche ansteigen.

6. Verfahren nach mindestens einem der voranstehenden Ansprüche, bei dem das härtebildende Reagenz (4), insbesondere das kalkhaltige Reagenz (4), eine kalkhaltige Suspension, insbesondere eine Kalksuspension oder eine Löschkalksuspension, insbesondere in Form einer Kalkmilch, ist.

7. Verfahren nach mindestens einem der voranstehenden Ansprüche, bei dem bei einem Effluenten (32) der Gipsfällung (24) zumindest eine druckgetriebene Membranfiltration (40), insbesondere eine Nanofiltration (41) und/oder eine Umkehr-Osmose (42), durchgeführt wird.

8. Verfahren nach mindestens einem der voranstehenden Ansprüche, bei dem bei dem Effluenten der Gipsfällung (32) zunächst eine Nanofiltration (41) und anschließend unter Verwendung eines Permeats (33) der Nanofiltration (41) eine Umkehr-Osmose (42) durchgeführt wird.

9. Verfahren nach mindestens einem der voranstehenden Ansprüche, bei dem bei einem Effluenten (32) der Gipsfällung (24) eine Nanofiltration (41) und unter Verwendung eines Konzentrats (34) der Nanofiltration (41) eine Sulfataufkonzentration (43) durchgeführt wird, wobei das Konzentrat (34) der Nanofiltration (41) in die Gipsfällung (24) zurückgeführt wird (44).

10. Verfahren nach mindestens dem Anspruch 8, bei dem aus einem Permeat (33) der Nanofiltration (41) unter Durchführung der Umkehr-Osmose (42) das härtefreie, alkalische Reagenz (3) als Konzentrat (45) der Umkehr-Osmose (42) rückgewonnen wird (47).

11. Verfahren nach mindestens dem voranstehenden Anspruch, bei dem unter Durchführung der Umkehr-Osmose (42) eine Aufkonzentration (48) der härtefreien, alkalischen Reagenz (3) durchgeführt wird, wobei das Konzentrat (45) der Umkehr-Osmose (42) in die Metallfällung zurückgeführt wird (49).

12. Verfahren nach mindestens einem der voranstehenden Ansprüche, bei dem ein bei der Gipsfällung (24) ausgefällter Gips (16) deponiert und/oder als Füllmaterial, insbesondere in einem Bergbaubetrieb, verwendet wird (50).

13. Verfahren nach mindestens einem der voranstehenden Ansprüche, eingesetzt zu einer Frischwasseraufbereitung, wobei Frischwasser (52), insbesondere als ein Permeat (46) einer Umkehr-Osmose (42), von dem aufzuarbeitenden Minenwasser (2) abgetrennt wird (51).

14. Verfahren nach mindestens dem voranstehenden Anspruch, bei dem das abgetrennte Frischwasser (52) als Frischwasserquelle und/oder in einem das Minenwasser hervorbringenden Bergbaubetrieb, insbesondere zur Bildung von Prozess-und/oder Aufbereitungswässern, wiederverwendet wird.

15. Verfahren nach mindestens dem voranstehenden Anspruch, bei dem das abgetrennte Frischwasser (52) zumindest zum Teil zu einer Herstellung (54) der kalkhaltigen Reagenz (4), insbesondere der Kalk- oder Löschkalksuspension, und/oder der Herstellung (53) der härtefreien, alkalischen Reagenz (3) eingesetzt wird.

FIG 1

# FIG 2

AMD — 26

2

20

5,6,7

25

27    8,9,10

30    CaSo$_4$ ; 2H$_2$0 (s)    16

28

1

15

54    19
4    1M Ca(OH)$_2$    50

14    17    43,44

34

SO$_4$

40,41    32

29

33

50    53    3

18    1M NaOH

EP 2 537 813 A1

14

FIG 3

FIG 4

Europäisches
Patentamt

European
Patent Office

Office européen
des brevets

# EUROPÄISCHER RECHERCHENBERICHT

Nummer der Anmeldung

EP 11 17 1007

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 103 24 984 A1 (ETA AG ENGINEERING [DE]) 23. Dezember 2004 (2004-12-23) * Anspruch 1 * | 1-15 | INV. C02F9/00 |
| A | CHEN N ET AL: "Structural characterization of poorly-crystalline scorodite, iron(III)-arsenate co-precipitates and uranium mill neutralized raffinate solids using X-ray absorption fine structure spectroscopy", GEOCHIMICA ET COSMOCHIMICA ACTA, PERGAMON PRESS, NEW YORK, NY, US, Bd. 73, Nr. 11, 1. Juni 2009 (2009-06-01), Seiten 3260-3276, XP026302056, ISSN: 0016-7037, DOI: 10.1016/J.GCA.2009.02.019 [gefunden am 2009-03-03] * Seite 3262, linke Spalte * | 1-15 | ADD. C02F1/52 C02F103/10 C02F1/44 |
| A | JOHNSON D B ET AL: "Acid mine drainage remediation options: a review", SCIENCE OF THE TOTAL ENVIRONMENT, ELSEVIER, Bd. 338, Nr. 1-2, 1. Februar 2005 (2005-02-01), Seiten 3-14, XP004818416, ISSN: 0048-9697, DOI: 10.1016/J.SCITOTENV.2004.09.002 * Seite 7, linke Spalte * | 1-15 | |
| A | WO 99/33551 A1 (BASX SYSTEMS LLC [US]) 8. Juli 1999 (1999-07-08) * Abbildung 1 * | 3-5 | |
| A | WO 2009/152148 A1 (UNIV CALIFORNIA [US]; COHEN YORAM [US]; MCCOOL BRIAN C [US]; RAHARDIAN) 17. Dezember 2009 (2009-12-17) * Abbildung 8 * | 7-11 | |

RECHERCHIERTE SACHGEBIETE (IPC)

C02F

Der vorliegende Recherchenbericht wurde für alle Patentansprüche erstellt

| Recherchenort | Abschlußdatum der Recherche | Prüfer |
|---|---|---|
| Den Haag | 11. November 2011 | Janssens, Christophe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 1007

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2011

| Im Recherchenbericht angeführtes Patentdokument | Datum der Veröffentlichung | Mitglied(er) der Patentfamilie | Datum der Veröffentlichung |
|---|---|---|---|
| DE 10324984      A1 | 23-12-2004 | KEINE | |
| WO 9933551       A1 | 08-07-1999 | AU      2097199 A<br>WO      9933551 A1 | 19-07-1999<br>08-07-1999 |
| WO 2009152148    A1 | 17-12-2009 | TW    201002630 A<br>US   2011155665 A1<br>WO   2009152148 A1 | 16-01-2010<br>30-06-2011<br>17-12-2009 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON A. RIEGER et al.** Mine water treatment by membrane filtration processes - Experimental investigations on applicability. *Konferenz zu Membranen in der Trinkwassererzeugung und der Abwasserbehandlung,* 20. Oktober 2008

- *Desalination and Water Treatment,* 2009, vol. 6, 54-60, www.deswater.com